# EUROPÄISCHE PATENTANMELDUNG

(11) **EP 0 642 248 A2**
(43) Veröffentlichungstag der Anmeldung: **08.03.1995**
(21) Anmeldenummer: 94110110.7
(22) Anmeldetag: 29.06.1994
(51) Int. Cl.: H04M 3/42, H04M 9/00, H04Q 1/10

(54) **Kleines Telekommunikationssystem, insbesondere Heimtelefonsystem**

(30) Priorität: 28.07.1993 DE 9311289 U
(71) Anmelder: SIEMENS AKTIENGESELLSCHAFT, D-80333 München (DE)
(72) Erfinder: van Ledden, Hermann, Dipl.-Ing., D-46395 Bocholt (DE); Oberstelehn, Rolf, Dipl.-Ing., D-46399 Bocholt (DE); Nijmolen, Wim, NL-7102 Winterswijk (NL); Schroer, Edmund, Dipl.-Ing., D-46325 Borken (DE)

(57) **Zusammenfassung**

An das Kommunikationssystem wird eine geringe Anzahl von Endgeräten (FE) angeschlossen, die wahlweise untereinander bzw. mit einer Amtsleitung (AL) verbindbar sind. Die Gesamtheit aller, das kleine Kommunikationssystem bildender Einheiten und Einzelelemente sind unter Beibehaltung der Systemfunktionen, der teilnehmerleitungs- und amtsleitungsbezogenen Anschlußfunktionen und einschließlich der Steuerfunktionen für die implementierbaren Leistungsmerkmale in einem gehäusemäßig nicht zusätzlich angepaßten Standard-Fernsprechendgerät (FE1) integriert. In diesem sind die für seine Nutzung als Fernsprechendgerät ursprünglich vorhandenen Funktionseinheiten und die dazugehörigen bedienungsseitigen Eingabe- und Anzeigeelemente unverändert belassen.

## Beschreibung

Die Erfindung betrifft ein kleines Telekommunikationssystem, insbesondere Heimtelefonsystem mit einer speicherprogrammierten Systemsteuerung bei dem die daran angeschlossenen Endgeräte wahlweise untereinander bzw. mit einer Amtsleitung verbindbar sind und wobei aufgrund einer Teilnehmeranforderung durch die Systemsteuerung leistungsmerkmalspezifische Steuerprozeduren steuerbar sind.

Es ist ein Kommunikationssystem vorausgesetzt, an das nur eine geringe Anzahl von Fernsprechendgeräten und anstelle eines solchen Fernsprechendgerätes gegebenenfalls auch ein Datenendgerät, beispielsweise ein Faxgerät oder auch ein Türsprechsteller anschließbar sind. Ein solches kleines Kommunikationssystem ist beispielsweise für selbstständige Berufsgruppen und insbesondere für den häuslichen Bereich als Heimtelefonsystem einzusetzen. Es kann damit beispielsweise der Wunsch nach mehreren Sprechstellen innerhalb eines Wohnhauses erfüllt werden. In einer sinnvollen Auswahl stehen bei einem solchen kleinen Telekommunikationssystem die Leistungsmerkmale einer Nebenstellenanlage, wie z.B. gebührenfreier Internverkehr, Rückfrage und Gesprächsubergabe zur Verfügung. Über eine frei programmierbare Rufzuordnung könnte auch beispielsweise für ein bestimmtes Fernsprechendgerät ein Amtsruf unterdrückt werden. Üblicherweise wird das kleine Telekommunikationssystem je nach Größenordnung in einen sog. Systemschrank oder in einen Beikasten untergebracht, der dann jeweils im Raum anzubringen ist.

Es ist die Aufgabe der Erfindung, den Aufwand für die Montage des Kommunikationssystems beim Anwender zu reduzieren und gleichzeitig den erforderlichen Raumbedarf zu verringern.

Dies wird beim kleinen Telekommunikationssystem dadurch erreicht, daß die Gesamtheit aller, dieses kleine Kommunikationssystem bildende Einheiten und Einzelelemente unter Beibehaltung der dafür üblichen, im Zusammenhang mit dem Verbindungsaufbau, dem Verbindungsabbau und der Gesprächsabwicklung stehenden Systemfunktionen einschließlich der Steuerfunktionen für die implementierten Leistungsmerkmale und die teilnehmerleitungs- und amtsleitungsbezogenen Anschlußfunktionen in einem gehäusemäßig nicht zusätzlich angepassten Standard-Fernsprechendgerät integriert sind, in dem die für seine Nutzung als Fernsprechendgerät ursprünglich vorhandenen Funktionseinheiten und die dazugehörigen bedienungsseitigen Eingabe- und Anzeigeelemente unverändert belassen sind.

Es ist also erfindungsgemäß zusätzlich zu den normalen Funktionen eines Fernsprechendgerätes ein vollwertiges Telekommunikationssystem im Gehäuse eines Standard-Fernsprechendgerätes enthalten. Damit entfällt also die Notwendigkeit eines zusätzlichen Beikastens und damit auch der sonst dafür übliche Montageaufwand und der zusätzliche Raumbedarf. Durch die erreichte Kompaktheit des gesamten Kommunikationssystems ergibt sich insbesondere ein Vorteil für Kleinbüros und im häuslichen Bereich. Das Gehäuse des Standard-Fernsprechendgerätes, das das Telekommunikationssystem zusätzlich aufnimmt entspricht dem eines serienmäßig hergestellten Endgerätes einer vorhandenen Produktlinie. Aus den unterschiedlichen Serienprodukten wird ein hinsichtlich der Gehäuseabmessungen für den vorgesehenen Zweck geeignetes Fernsprechendgerät ausgewählt.

Um die Möglichkeit zu schaffen, das Telekommunikationssystem im Gehäuse eines serienmäßig hergestellten Fernsprechendgerätes zusätzlich unterzubringen, sind für die zu erfüllenden Funktionen besondere Lösungsprinzipien anzuwenden. Grundsätzlich erfolgt die Verwendung von Bauelementen, die einen geringen Platzbedarf erfordern, wie beispielsweise oberflächenmontierbare Bauelemente und es werden grundsätzlich hochintegrierte Baueinheiten eingesetzt. Als Systemsteuerung wird beispielsweise ein Prozessor bzw. ein Mikrokontroller verwendet, der möglichst viele integrierte Peripherieeinheiten beinhaltet. Neben dem Programm- bzw. Arbeitsspeicher betreffen diese Einheiten beispielsweise den Displaytreiber, den Mehrfrequenzcode-Zeichensender, serielle Schnittstellen, Hörton-Generatoren und interne Timer als beispielhafte Aufzählung. Es werden Lösungsprinzipien für die notwendigen Signalisierungs-, Speicher- und Spannungsversorgungsfunktionen verwendet, die eine weitestgehende Reduzierung der erforderlichen Hardware unter größtmöglichen Verzicht auf elektromechanische und elektromagnetische Bauteile erlauben. Damit verringert sich sich der Raumbedarf innerhalb des Gehäuses und es erhöht sich auch wegen der fehlenden Geräuschentwicklung die Akzeptanz beim Anwender. Um die genannte Realisierung zu ermöglichen, wird im Hinblick auf eine optimierte Reduzierung der Hardware anstelle einer Hardwarelösung eine softwaremäßige Lösung angestrebt. Als Beispiel hierfür sei die Erzeugung der unterschiedlichen Hörtöne erwähnt. Weiterhin wird unter Ausnutzung integrierter Bausteine der kleinstmögliche Ausbau des Koppelfeldes realisiert. Zur Einsparung von Steuerleitungen wird angestrebt, Schaltaufträge seriell zu übertragen. Für die Anschlüsse der Teilnehmerendgeräte ist es im Hinblick auf gewünschte Lösungen mit einem verringerten Platzbedarf sinnvoll, eine Relais- und drosselfreie Ruf- und Speicherspannungsversorgung vorzusehen. Es werden also damit beispielsweise Rufstromwicklungen eingespart. Mit dem Einsatz neuester Technologien und der angesprochenen konzeptionellen Gestaltung wird es also ermöglicht, ein kleines Telekommunikationssystem zusätzlich zu den normalen Funktion eines Fernsprechendgerätes in einem serienmäßig gefertigten Fernsprechendgerätgehäuse zu integrieren. An dieses Endgerät, dem die genannte Doppelfunktion zugeordnet ist, lassen sich die am normalen Hauptanschluß funktionsfähigen Endgeräte anschließen. Dadurch sind den Wünschen nach Telefonfunktionen kaum Grenzen gesetzt. Gemäß einer Weiterbildung der Erfindung weist das mit dem Telekommunikationssystem ergänzte Standard-Fernsprechendgerät, das beispielsweise einem seriell gefertigten Komfortfernsprechendgerät enspricht ein Display auf, auf dem der jeweilige vermittlungstechnische Zustand der anderen an diesem Fernsprechendgerät angeschlossenen Endgeräte angezeigt wird. Eine solche Anzeige erfolgt immer dann, wenn keine aktuellen Fernsprechfunktionen für dieses Fernsprechendgerät abgewickelt werden. Wird dieses Fernsprechendgerät im Zusammenhang mit einer gewünschten Gesprächsverbindung selbst aktiv, dann erfolgt die Displayanzeige der dabei auftretenden verbindungsbezogenen Informationen.

An das durch das kleine Telekommunikationssystem ergänzte Fernsprechendgerät sind sowohl ausschließlich als Fernsprechendgerät nutzbare Endgeräte der gleichen Produktlinie, als auch hinsichtlich ihres Funktionsumfangs und Wahlverfahrens davon abweichende Fernsprechendgeräte anderer Produktlinien und zumindest ein Datenendgerät anschließbar.

Für das ergänzte Fernsprechendgerät ist im Vergleich zu den übrigen daran angeschlossenen Fernsprechendgeräten vorzugsweise die Inanspruchnahme zusätzlicher, im wesentlichen die Systemkonfiguration und die Teilnehmerberechtigungen beeinflussende Leistungsmerkmale vorgesehen.

Weitere Ausgestaltungen sind den restlichen Ansprüchen zu entnehmen.

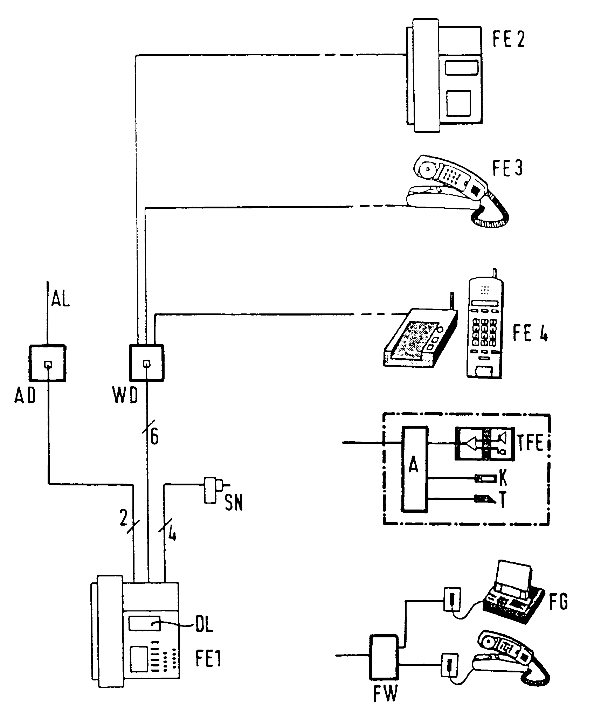

In der Figur ist das Anschlußprinzip von Endgeräten an ein aus einer Serienproduktion stammendes Endgerät, in dem ein kleines Telekommunikationssystem integriert ist, gezeigt.

Das Endgerät FE1 weist ein serienmäßig hergestelltes Gehäuse auf und ist auch hinsichtlich seiner Fernsprechfunktionen in gleicher Weise wie jedes andere Fernsprechgerät der gleichen Serie bestückt. Es kann beispielsweise ein Komfortfernsprechendgerät darstellen. Das Endgerät FE1 ist wie üblich über eine zweiadrige Anschlußleitung an die Anschlußdose AD für den Amtsanschluß geführt. Durch das im Endgerät FE1 enthaltene kleine Telekommunikationssystem kann nun beispielsweise ein privat genutzter Amtsanschluß erweitert werden. Werden die eingangs erwähnten Kriterien für die Gestaltung des integrierten kleinen Telekommunikationssystems berücksichtigt, so ist dieses ohne weiteres in einem serienmäßigen Fernsprechendgerätegehäuse unterzubringen. Dies wird dann im wesentlichen durch die vorgenommene Auswahl der Art und des Funktionsumfanges der verwendeten Einheiten und Elemente und in der Reduzierung der Hardwareanteile zugunsten von softwaremäßigen Lösungen ermöglicht. Beispielhafte Lösungswege hierzu wurden bereits eingangs erläutert.

Zur Unterstützung der beruflichen Tätigkeit beispielsweise bei einem Kleinbetrieb oder in der Funktion als Heimtelefonsystem lassen sich an das mit dem kleinen Telekommunikationssystem ergänzte Fernsprechendgerät FE1 mehrere Endgeräte anschließen. Im Beispiel sind es die Endgeräte FE2 - FE4. Grundsätzlich sind Endgeräte anzuschließen, die auch am normalen Posthauptanschluß anschließbar sind. Der Anschluß der einzelnen Endgeräte erfolgt beispielsweise über eine Verteilerdose WD, die einen kleinen Wandverteiler oder allgemein eine Anschlußeinheit darstellen kann. Davon ausgehend erfolgt dann die Verbindung zu den einzelnen Endgeräten über Zweidrahtkabelleitungen. Es kann ein bilingualer Teilnehmeranschluß vorgesehen werden, so daß Fernsprechendgeräte mit Impulswahlverfahren oder auch mit Mehrfrequenzcode-Wahlverfahren einsetzbar sind. Als Fernsprechendgeräte sind mit dem Endgerät FE1 hinsichtlich der Fernsprechausstattung gleichartige Endgeräte oder auch nur Endgeräte davon abweichender Ausstattung der gleichen Produktlinie einsetzbar. Es sind jedoch in gleicher Weise auch Fernsprechendgeräte zu verwenden, die anderen Produktlinien zugehörig sind. Wie am Beispiel VE4 gezeigt, sind auch Cordless-Fernsprechendgeräte anschließbar. Es könnte auch, wie in der Figur angedeutet, anstelle eines Fernsprechendgerätes eine Türfreisprecheinrichtung TFE angeschlossen werden. Von jedem Fernsprechendgerät aus läßt sich dann eine Verbindung zu dieser Türfreisprecheinrichtung aufnehmen. Wird in diesem Zusammenhang ein Adapter A eingesetzt, so läßt sich vom Fernsprechendgerät aus mit einer Tastenbetätigung ein Türöffner T aktivieren. Bei Vorhandensein einer Türklingel T wird es durch den Adapter ermöglicht, daß die Fernsprechendgeräte bei einer Klingelbetätigung mit einem Sonderruf-Rythmus gerufen werden. Weiterhin ist in der Figur angedeutet, daß beispielsweise über eine Faxweiche FW ein Faxgerät FG anschließbar ist. Die Faxweiche schaltet dann die Leitung automatisch zum angeschlossenen Faxgerät durch, wenn der Anruf von einem Faxgerät kommt. Eine solche Faxweiche mit dem angeschlossenen Faxgerät kann grundsätzlich auch direkt an der Amtsleitung AL angeschlossen werden. Faxanrufe werden dann sofort an das Faxgerät weitergeleitet während normale, vom Fernsprechgerät ausgehende Anrufe zu dem mit dem kleinen Telekommunikationssystem ergänzten Fernsprechendgerät FE1 gelangen. Die Stromversorgung kann über ein Steckernetzteil SN vorgenommen werden.

Für das im Fernsprechendgerät FE1 enhaltene Telekommunikationssystem sind grundsätzlich die bekannten Systemfunktionen einer Nebenstellenanlage und für die daran angeschlossenen Fernsprechendgeräte die bekannten Telefonfunktionen wie beispielsweise Namentasten, Wahlwiederholung, Notizbuchfunktion, Gebührenspeicher usw. realisierbar. Über verschiedene Programmierungen wird z.B. auch die Anpassung des Kommunikationssystems an die gewünschten Leistungsmerkmale ermöglicht. Konfiguriermöglichkeiten können beispielsweise hinsichtlich der Rufzuordnung und der Einstellung der Amtsberechtigung für die einzelnen Fernsprechendgeräte vorgesehen werden. Es kann eine Gebührenerfassung vorgesehen sein, durch die sowohl für einen bestimmbaren Zeitraum die gesamten für das System aufgelaufenen Gebühren als auch die durch die einzelnen Teilnehmerendgeräte verursachten Gebühren erfaßt werden. Zudem könnte über einen zusätzlichen Alarmeingang eine Alarmanlagenfunktion erfolgen, durch die nach einer Alarmauslösung ein automatischer Verbindungsaufbau zu einer vorprogrammierten Teilnehmerstelle vollzogen wird. Über einen Sprachausgabebaustein ist dann die Ansage eines gespeicherten Textes möglich.

## Patentansprüche

1. Kleines Telekommunikationssystem, insbesondere Heimtelefonsystem mit einer speicherprogrammierten Systemsteuerung bei dem die daran angeschlossenen Endgeräte, wahlweise untereinander bzw. mit einer Amtsleitung verbindbar sind und wobei aufgrund einer Teilnehmeranforderung durch die Systemsteuerung leistungsmerkmalspezifische Steuerprozeduren steuerbar sind,
**dadurch gekennzeichnet**,
daß die Gesamtheit aller, das kleine Kommunikationssystem bildenden Einheiten und Einzelelemente unter Beibehaltung der dafür üblichen, im Zusammenhang mit dem Verbindungsaufbau, dem Verbindungsabbau und der Gesprächsabwicklung stehenden Systemfunktionen einschließlich der Steuerfunktionen für die implementierten Leistungsmerkmale und die teilnehmerleitungs- und amtsleitungsbezogenen Anschlußfunktionen in einem gehäusemäßig nicht zusätzlich angepaßten Standard-Fernsprechendgerät integriert sind, in dem die für seine Nutzung als Fernsprechendgerät ursprünglich vorhandenen Funktionseinheiten und die dazugehörigen bedienungseitigen Eingabe- und Anzeigeelemente unverändert belassen sind.

2. Kleines Telekommunikationssystem nach Anspruch 1,
**dadurch gekennzeichnet**,
daß das ergänzte Standardfernsprechendgerät ein einer serienmäßig hergestellten Produktlinie zugehöriges und hinsichtlich der Gehäuseabmessungen geeignet ausgewähltes Endgerät darstellt.

3. Kleines Telekommunikationssystem nach Anspruch 1 und 2,
**dadurch gekennzeichnet**,
daß seine Realisierung durch den Einsatz von einen geringen Platzbedarf erfordernden Bauelementen und von hochintegrierten Baueinheiten erfolgt und gleichzeitig Lösungsprinzipien für die notwendigen Signalisierungs-, Speicher- und Spannungsversorgungsfunktionen verwendet werden, die eine weitestgehende Reduzierung der erforderlichen Hardware unter größtmöglichen Verzicht auf elektromechanische und elekromagnetische Bauteile ermöglichen.

4. Kleines Telekommunikationssystem nach einem der vorhergehenden Ansprüche 1 bis 3,
**dadurch gekennzeichnet**,
daß das ergänzte Standardfernsprechendgerät (FE1) ein Display (DL) aufweist, auf dem der jeweilige vermittlungstechnische Zustand der anderen an diesem Standardfernsprechendgerät angeschlossenen Endgeräte (FE2...FE4) angezeigt wird, solange dieses Standardfernsprechendgerät (FE1) für keine aktuellen Fernsprechfunktionen herangezogen wird.

5. Kleines Telekommunikationssystem nach einem der vorhergehenden Ansprüche 1 bis 4,
**dadurch gekennzeichnet**,
daß an das ergänzte Standardfernsprechendgerät (FE1) sowohl ausschließlich die ursprüngliche Nutzung als Fernsprechendgerät ermöglichende Endgeräte (FE2) der gleichen Produktlinie, als auch hinsichtlich ihres Funktionsumfangs und Wahlverfahrens davon abweichende Fernsprechendgeräte (FE3, FE4) anderer Produktlinien und zumindest ein Datenendgerät anschließbar sind.

6. Kleines Kommunikationssystem nach einem der vorhergehenden Ansprüche,
**dadurch gekennzeichnet**,
daß für das ergänzte Standardfernsprechendgerät (FE1) im Vergleich zu den übrigen daran angeschlossenen Fernsprechendgeräten (FE2...FE4) vorzugsweise die Inanspruchnahme zusätzlicher im wesentlichen die Systemkonfiguration und die Teilnehmerberechtigungen beeinflussende Leistungsmerkmale vorgesehen ist.

7. Kleines Telekommunikationssystem nach einem der vorhergehenden Ansprüche,
**dadurch gekennzeichnet**,
daß an das ergänzte Standardfernsprechendgerät die übrigen Endgeräte unter Zwischenschaltung einer Verteilereinheit angeschlossen sind.

8. Kleines Telekommunikationssystem nach einem der vorhergehenden Ansprüche,
**dadurch gekennzeichnet**,
daß seine Spannungsversorgung mit Hilfe eines Steckernetzteils (SN) vorgenommen wird.

9. Kleines Telekommunikationssystem nach einem der vorhergehenden Ansprüche,
**dadurch gekennzeichnet**,
daß die Zuführungen der notwendigen Versorgungs- und Anschlußleitungen für das ergänzte Standardfernsprechendgerät an den sowieso als Sollausbruchsstellen vorgesehenen Bereichen des Gehäuses erfolgt.

10. Kleines Kommunikationssystem nach einem der vorhergehenden Ansprüche,
**dadurch gekennzeichnet**,
daß das ergänzte Standardfernsprechendgerät eine Gebührenerfassungseinrichtung aufweist, die die gesamten Gebühreneinheiten für das System und/oder die aufgelaufenen Gebühreneinheiten der einzelnen Teilnehmerendgeräte erfaßt.

11. Kleines Telekommunikationssystem nach einem der vorhergehenden Ansprüche,
**dadurch gekennzeichnet**,
daß durch einen zusätzlichen Alarmeingang eine Alarmanlagenfunktion realisierbar ist, durch die nach Alarmauslösung ein automatischer Verbindungsaufbau zu einer vorprogrammierten Teilnehmerstelle erfolgt.
